# EUROPEAN PATENT SPECIFICATION

(11) **EP 4 593 183 B1**
(45) Date of publication and mention of the grant of the patent: **09.09.2026**
(21) Application number: 24207740.2
(22) Date of filing: 21.10.2024
(51) Int. Cl.: H01M 50/358, H01M 50/204, H01M 50/30, H01M 50/342, H01M 50/271

(54) **EXPLOSION-PROOF VALVE INTEGRATED IN TOP COVER AND BATTERY PACK**
IN DECKEL UND BATTERIEPACK INTEGRIERTES EXPLOSIONSSICHERES VENTIL
SOUPAPE ANTIDÉFLAGRANTE INTÉGRÉE DANS UN COUVERCLE SUPÉRIEUR ET BLOC-BATTERIE

(30) Priority: 29.01.2024 CN 202420221614 U
(43) Date of publication of application: 30.07.2025
(73) Proprietor: Eve Energy Co. Ltd., Huizhou, Guangdong 516000 (CN)
(72) Inventor: Xie, Hongyao, Huizhou, Guangdong, 516000 (CN)
(74) Representative: Michalski Hüttermann & Partner mbB

(56) References cited:
- JP-A- 2015 056 323
- JP-A- H06 176 748
- JP-B2- 6 707 895

## Description

### TECHNICAL FIELD

The present disclosure relates to the technical field of explosion-proof valves and, particularly, to an explosion-proof valve integrated in a top cover and a battery pack.

### BACKGROUND

In related technologies, in order to prevent thermal runaway accidents and avoid imbalances in the internal and external pressures of the battery pack, and considering that lithium batteries may produce a large amount of toxic gases instantaneously when caught fire, it is necessary to install a pressure relief valve to discharge the gases.

In related technologies, an explosion-proof valve automatically opens when the internal pressure or temperature of the battery exceeds a limit, thereby releasing the internal pressure and ensuring the safety of the battery. Battery packs in related technologies generally adopt a separate explosion-proof valve.

Firstly, components of the separate explosion-proof valve are relatively expensive, requiring additional materials and manufacturing processes, which leads to an increase in the overall cost of the battery pack.

Secondly, the separate explosion-proof valve needs to be assembled with a top cover of the battery pack, which leads to an increase in the assembly process and complexity of the battery pack. During assembly, the sealing performance between the explosion-proof valve and the top cover needs to be ensured to prevent the internal gas of the battery pack from leaking. This requires additional processes and testing methods, which increases production costs and time.
JPH06176748A discloses that to obtain a storage battery, according to the preamble of claim 1, in which the electrolyte is not leaked from a gas discharge hole even in the case where a battery, which is loaded on an automobile or the like, is inclined. CONSTITUTION : In a storage battery, discharge gas from plural cell chambers 4 are led from a gas discharge chamber 5, which consists of an inner cap 2 and an upper cap 1 for covering the inner cap 2, to the outside through a fine hole filter 7. A gas discharge hole 8, which has an opening surface 8a provided in the back surface of the upper cap 1 at a position separated from the side surface 5a of the gas discharge chamber 5 and which has the other opening surface 8b in the outside surface of the upper cap 1, is formed in the upper cap 1, and a fine hole filter 7 is fitted to one opening surface 8a and a clearance 9 is formed under the fine hole filter 7.
JP2015056323A discloses that to provide a power storage device in which foreign objects are less likely to intrude into an outer sheath from a communication part. SOLUTION : A power storage device 100 of the invention includes : one or more power storage elements 400 containing a nonaqueous electrolyte; and an outer sheath 200 which stores the one or more power storage elements 400. The outer sheath 200 includes a communication part 130A forming a communication passage W11 which allows an internal space S1 of the outer sheath 200 to communicate with an external space S2 and extends in an X axis direction. The communication part 130A includes shield plates 131A to 134A which prevent a material in the communication passage W11 from moving in the X axis direction and are disposed so that communication between the internal space S1 and the external space S2 through the communication passage W11 is maintained. COPYRIGHT : (C)2015, JPO&INPIT.
JP6707895B2 discloses that An energy storage apparatus includes an outer case, and an energy storage device housed in an inside of the outer case. The outer case includes a ventilation chamber which makes the inside and an outside of the outer case communicate with each other. The ventilation chamber includes a front wall in which a through hole communicating with the outside is formed, a back wall disposed at a position where the back wall opposedly faces the front wall, a first wall disposed between the through hole and the back wall, and a first side wall disposed in an extending manner along a first direction which intersects with the front wall with a gap formed between the first side wall and the first wall. The gap is formed over a distance from the front wall to the back wall along the first direction.

### SUMMARY

The present disclosure is set out in the appended set of claims.
1. Reduction in the number of parts: by integrating the explosion-proof valve body and the top cover body into a single unit, the number of parts is reduced and costs are lowered. This may lead to a reduction in manufacturing and assembly time and costs, and an increase in production efficiency.
2. Improvement in reliability: by integrating the explosion-proof valve body and the top cover body into a single unit, it leads to enhancement of the airtightness of the assembly between the two, to a reduction in the risk of leakage, and to an improvement in reliability. This may lead to an increase in product quality and safety, and a reduction in the costs of faults and repairs.
3. Increase in production efficiency: by integrating the explosion-proof valve body and the top cover body into a single unit, it leads to a reduction in assembly process, and to an increase in production efficiency. This may lead to a reduction in production cycle and cost, and an increase in product competitiveness.
4. Improvement in user experience: by integrating the explosion-proof valve body and the top cover body into a single unit, it leads to a reduction in volume and weight of the production, and an improvement in user experience. This may lead to a more portable and user-friendly product, thereby increasing user satisfaction.

### BRIEF DESCRIPTION OF THE DRAWINGS

Fig. 1 is a schematic structural diagram of an exterior side of the top cover body of the embodiment of the present disclosure;
Fig. 2 is a schematic structural diagram of an interior side of the top cover body of the embodiment of the present disclosure;
Fig. 3 is an enlarged schematic structural diagram of the explosion-proof valve body of the embodiment of the present disclosure;
Fig. 4 is a schematic structural diagram in a partially disassembled view of the explosion-proof valve body of the embodiment of the present disclosure; and
Fig. 5 is a schematic structural diagram in sectional view of the explosion-proof valve body of the embodiment of the present disclosure.

The meanings of the reference signs are as follows: 1 top cover body; 11 accommodating chamber; 12 opening; 13 end surface; 14 lateral surface; 15 assembly flange; 2 explosion-proof valve body; 21 pressure relief channel; 211 first channel; 212 second channel; 22 breathable film; 23 pressure relief opening; 3 reinforcing channel; 31 outflow valve; 311 support beam; 312 airflow orifice; 32 conical block; 4 stepped assembly structure.

### DETAILED DESCRIPTION

In the description of the present disclosure, it is to be noted that the terms "up", "down", "front", "back", "left", "right", "vertical", "horizontal", "top", "bottom", "inside", "outside" and other orientation or position relationships are based on the orientation or position relationships shown in the attached drawings. It is only intended to facilitate description of the present disclosure and simplify description, but not to indicate or imply that the referred device or element has a specific orientation, or is constructed and operated in a specific orientation. Therefore, they should not be construed as a limitation of the present disclosure.

Unless otherwise defined, all terms including technical and scientific terms used herein have the same meaning as commonly understood by those skilled in the art to which the present disclosure belongs. The terms used herein in the specification of the present disclosure are used only to describe specific embodiments and are not intended as a limitation of the disclosure.

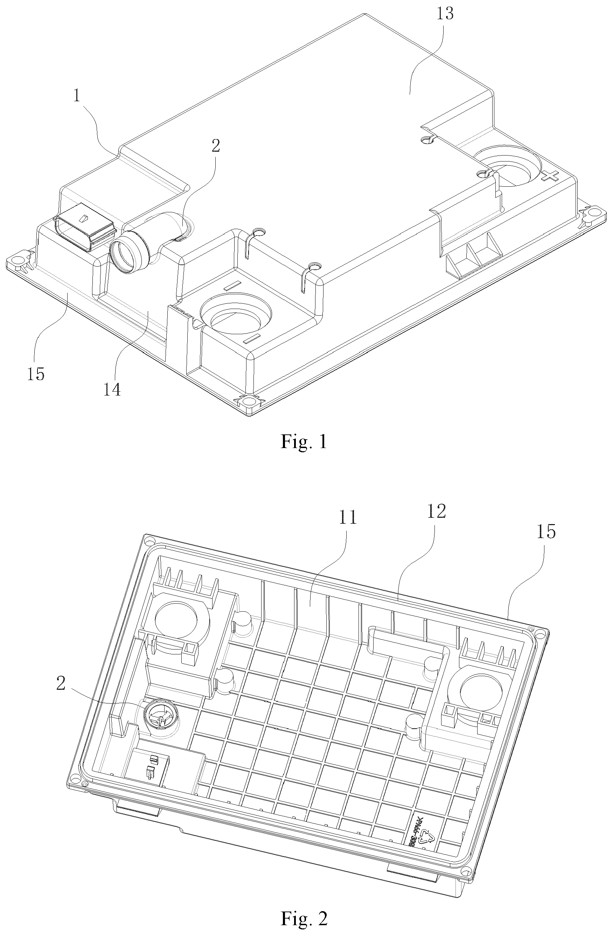

Referring to Figs. 1-5 in embodiment of the present disclosure, disclosed is an explosion-proof valve integrated in a top cover, including a top cover body 1 and an explosion-proof valve body 2 that are integrally formed. An integral design leads to a reduction in costs, the number of the parts, and assembly process, to an increase in production efficiency. In such an arrangement, it avoids assembly airtightness problem between the two, leads to a reduction in the risk of leakage, and to an increase in reliability.

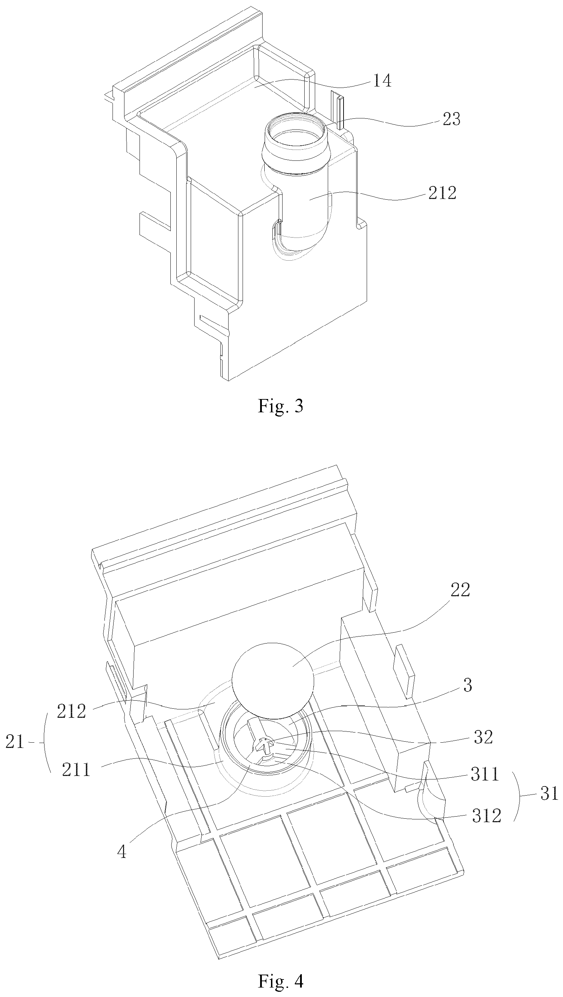

In a specific implementation, referring to Figs. 1-2, the top cover body 1 is provided with an accommodating chamber 11, a side of the accommodating chamber 11 is open to form an opening 12, another side of the accommodating chamber 11 opposite to the opening 12 is an end surface 13 of the top cover body 1, the explosion-proof valve body 2 includes a pressure relief channel 21 and a breathable film 22. An end of the pressure relief channel 21 is in communication with an interior of the accommodating chamber 11, an opposite end of the pressure relief channel 21 is in communication with an exterior of the accommodating chamber 11, and the breathable film 22 is assembled to the end of the pressure relief channel 21. Specifically, referring to Fig. 4, the pressure relief channel 21 includes a first channel 211 and a second channel 212, the first channel 211 is vertically connected to the end surface 13, and the second channel 212 is vertically connected to the first channel 211. The second channel 212 being vertically connected to the first channel 211 may allow an airflow passing through the explosion-proof valve to be subjected to more resistance, so as to reduce the pressure of the airflow and prevent the airflow from flowing back, thereby preventing the explosive wave from propagating in an opposite direction from the explosion-proof valve. Also, a bend of 90° may lead to a reduction in the noise generated by the airflow passing through the explosion-proof valve, thereby contributing to improving the reliability of the explosion-proof valve and the safety of personnel.

Referring to Fig. 1 and 4, the end surface 13 of the top cover body 1 is bordered with a plurality of lateral surfaces 14, the second channel 212 penetrates one of the plurality of lateral surfaces 14 that is close thereto, the second channel 212 is at least partially embedded into the lateral surface 14 close thereto, and a pressure relief opening 23 is formed by an end of the second channel 212 penetrating through the lateral surface 14 close thereto to be extended toward outside of the accommodating chamber 11. The breathable film 22 is breached when the internal pressure of the battery pack exceeds a set value, and the internal pressure of the battery pack is released through the pressure relief opening 23. In some implementations, the second channel 212 is vertically connected to the lateral surface 14. An angle between the first channel 211 and the second channel 212 may be appropriately adjusted to correspond to an angle between the lateral surface 14 and the end surface 13, thereby achieving a better fit, when the angle between the lateral surface 14 and the end surface 13 is greater than 90°. Admittedly, in other implementations, the angle between the lateral surface 14 and the end surface 13 may also not correspond to the angle between the first channel 211 and the second channel 212, and may be changed according to the actual situation, which is not specifically limited in the present embodiment.

In some implementations, referring to Fig. 4, in order to increase the pressure relief strength of the second channel 212 to prevent explosion when relieving pressure, a reinforcing channel 3 is provided in the second channel 212, the reinforcing channel 3 is at least partially extended into the first channel 211, and an end of the reinforcing channel 3 proximal to the first channel 211 is provided with an outflow valve 31. By configuring the reinforcing channel 3 to increase a thickness of the second channel 212, the second channel 212 contributes to its own strength, thereby improving the safety and reliability of the explosion-proof valve. In an implementation, the reinforcing channel 3 and the second channel 212 are integrally molded, which saves the assembly process. In other implementations, the specific assembly manner between the reinforcing channel 3 and the second channel 212 is not limited.

In order to better divert and depressurize the relief gas, in some implementations, referring to Fig. 4, the outflow valve 31 includes at least one support beam 311, and an airflow orifice 312 is formed between the support beam 311 and the reinforcing channel 3. The support beam 311 of the outflow valve 31 is configured to increase the stability and reliability of the explosion-proof valve, and is typically spliced by two intersecting metal support beams 311 or three intersecting metal support beams 311. In an implementation, provided are three support beams 311, an end of each of the three support beams 311 is connected to an axis of the reinforcing channel 3, an opposite end of each of the three support beams 311 is connected to an internal wall of the reinforcing channel 3, and the connection manner of both ends of the support beams 311 includes, but is not limited to, such as an integral connection, a welding connection, or a bonding connection. A side of a joint of the three support beams 311 facing the accommodating chamber 11 is provided with a conical block 32. A surface of the conical block 32 is provided with a flow diversion groove arranged along an axial direction of the conical block 32, and the conical block 32 is configured to control the flow rate and direction of the airflow. The velocity of the airflow increases as it passes through the conical structure, thereby reducing the pressure of the airflow. The air flow is dispersed by the air diversion groove and discharged through a plurality of airflow orifices 312, serving to reduce the air pressure. In other implementations, the number of the support beams 311 is not specifically limited, so a shape spliced by the support beams 311 includes, but is not limited to, such as a cruciform, triangle, or diamond shape.

Referring to Fig. 4, a stepped assembly structure 4 is formed between a side of the reinforcing channel 3 facing the accommodating chamber 11 and the first channel 211, and the breathable film 22 is provided on the stepped assembly structure 4, which is contributing to the assembly of the breathable film 22. In some implementations, the breathable film 22 and the stepped assembly structure 4 are connected by thermal or ultrasonic welding.

In some implementations, referring to Figs. 1, 2, and 5, edges of the opening 12 of the accommodating chamber 11 are provided with an assembly flange 15 extending toward outside of the accommodating chamber 11. In order to allow the assembly flange 15 to serve a protective role on the pressure relief opening 23, the end of the second channel 212 penetrating through the lateral surface 14 close thereto is configured to be not project from an end of the assembly flange 15, so as to serve a protective role on the pressure relief opening of the second channel 212, which leads to a reduction in the risk of contact of the pressure relief opening 23, allowing the pressure relief opening 23 being not easily collision resulting in damage of the explosion-proof valve.

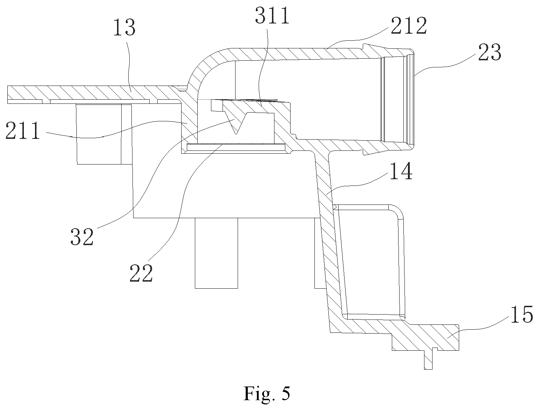

In some implementations, in order to improve the response speed and efficiency of the explosion-proof valve, an inner wall radius of the second channel 212 gradually increases in a direction away from the accommodating chamber 11. In an implementation, referring to Fig. 5, only a part of the second channel 212 close to the pressure relief opening 23 is changed in the inner wall radius, which increases a flow area of the pressure relief opening 23, thereby accelerating a release speed of the pressure and improving the response speed and efficiency of the explosion-proof valve.

Related in the present disclosure is also a battery pack, including a battery module, a battery box, and an explosion-proof valve integrated in a top cover. The battery module includes one or more cells and a pressure relief valve mounted on the cell, and the pressure relief valve is in communication with an end of the pressure relief channel 21. An integrated design of the explosion-proof valve and the top cover body 1 leads to an increase of the production efficiency of the battery pack, to a reduction in manufacturing costs and assembly process to a certain extent.

## Claims

1. An explosion-proof valve integrated in a top cover, comprising:
a top cover body (1), provided with an accommodating chamber (11);
an explosion-proof valve body (2), comprising a pressure relief channel (21) and a breathable film (22), wherein the pressure relief channel (21) and the top cover body (1) are integrally molded, an end of the pressure relief channel (21) is in communication with an interior of the accommodating chamber (11), an opposite end of the pressure relief channel (21) is in communication with an exterior of the accommodating chamber (11), and the breathable film (22) is assembled to the end of the pressure relief channel (21);
**characterized in that** a side of the accommodating chamber (11) is open to form an opening (12), another side of the accommodating chamber (11) opposite to the opening (12) is an end surface (13) of the top cover body (1), the pressure relief channel (21) comprises a first channel (211) and a second channel (212), the first channel (211) is vertically connected to the end surface (13), and the second channel (212) is vertically connected to the first channel (211).

2. The explosion-proof valve integrated in a top cover according to claim 1, wherein the end surface (13) of the top cover body (1) is bordered with a plurality of lateral surfaces (14), the second channel (212) penetrates one of the plurality of lateral surfaces (14) that is close thereto, the second channel (212) is at least partially embedded into the lateral surface (14) close thereto, and a pressure relief opening (23) is formed by an end of the second channel (212) penetrating through the lateral surface (14) close thereto to be extended toward outside of the accommodating chamber (11).

3. The explosion-proof valve integrated in a top cover according to claim 1, wherein a reinforcing channel (3) is provided in the second channel (212), the reinforcing channel (3) is at least partially extended into the first channel (211), and an end of the reinforcing channel (3) proximal to the first channel (211) is provided with an outflow valve (31).

4. The explosion-proof valve integrated in a top cover according to claim 3, wherein the outflow valve (31) comprises at least one support beam (311), and an airflow orifice (312) is formed between the support beam (311) and the reinforcing channel (3).

5. The explosion-proof valve integrated in a top cover according to claim 4, wherein the outflow valve (31) comprises three support beams (311).

6. The explosion-proof valve integrated in a top cover according to claim 5, wherein an end of each of the three support beams (311) is connected to an axis of the reinforcing channel (3), an opposite end of each of the three support beams (311) is connected to an internal wall of the reinforcing channel (3).

7. The explosion-proof valve integrated in a top cover according to claim 6, wherein the connection manner of both ends of the support beams (311) is an integral connection.

8. The explosion-proof valve integrated in a top cover according to any one of claims 4-7, wherein a side of the support beam (311) facing the accommodating chamber (11) is provided with a conical block (32).

9. The explosion-proof valve integrated in a top cover according to claim 8, wherein a surface of the conical block (32) is provided with a flow diversion groove arranged along an axial direction of the conical block (32).

10. The explosion-proof valve integrated in a top cover according to claim 3, wherein a stepped assembly structure (4) is formed between a side of the reinforcing channel (3) facing the accommodating chamber (11) and the first channel (211), and the breathable film (22) is provided on the stepped assembly structure (4).

11. The explosion-proof valve integrated in a top cover according to claim 10, wherein the breathable film (22) and the stepped assembly structure (4) are connected by thermal or ultrasonic welding.

12. The explosion-proof valve integrated in a top cover according to claim 2, wherein edges of the opening (12) of the accommodating chamber (11) are provided with an assembly flange (15) extending toward outside of the accommodating chamber (11), and the end of the second channel (212) penetrating through the lateral surface (14) close thereto does not project from an end of the assembly flange (15).

13. The explosion-proof valve integrated in a top cover according to claim 2, wherein an inner wall radius of the second channel (212) gradually increases in a direction away from the accommodating chamber (11).

14. A battery pack, comprising a battery module, a battery box, and the explosion-proof valve integrated in a top cover according to any one of claims 1-13, wherein the battery module comprises one or more cells and a pressure relief valve assembled to the cells, and the pressure relief valve is in communication with an end of the pressure relief channel (21).

## Patentansprüche

1. Explosionssicheres Ventil, das in einen Deckel integriert ist, umfassend:
einen Deckelkörper (1) mit einer Aufnahmekammer (11);
einen explosionssicheren Ventilkörper (2), umfassend einen Druckentlastungskanal (21) und eine atmungsaktive Folie (22), wobei der Druckentlastungskanal (21) und der Deckelkörper (1) einstückig geformt sind, ein Ende des Druckentlastungskanals (21) in Kommunikation mit einem Inneren der Aufnahmekammer (11) ist, ein gegenüberliegendes Ende des Druckentlastungskanals (21) in Verbindung mit einem Äußeren der Aufnahmekammer (11) ist und die atmungsaktive Folie (22) an dem Ende des Druckentlastungskanals (21) montiert ist;
**dadurch gekennzeichnet, dass** eine Seite der Aufnahmekammer (11) offen ist, um eine Öffnung (12) zu bilden, eine andere Seite der Aufnahmekammer (11) gegenüber der Öffnung (12) eine Endfläche (13) des Deckelkörpers (1) ist, der Druckentlastungskanal (21) einen ersten Kanal (211) und einen zweiten Kanal (212) umfasst, der erste Kanal (211) senkrecht mit der Endfläche (13) verbunden ist und der zweite Kanal (212) senkrecht mit dem ersten Kanal (211) verbunden ist.

2. Explosionssicheres Ventil, das in einen Deckel integriert ist, nach Anspruch 1, wobei die Endfläche (13) des Deckelkörpers (1) mit einer Vielzahl von lateralen Flächen (14) begrenzt ist, der zweite Kanal (212) eine aus der Vielzahl von lateralen Flächen (14), die in der Nähe dazu ist, durchdringt, der zweite Kanal (212) zumindest teilweise in die laterale Fläche (14), die in der Nähe dazu ist, eingebettet ist, und eine Druckentlastungsöffnung (23) durch ein Ende des zweiten Kanals (212), der die laterale Fläche (14), die in der Nähe dazu ist, durchdringt, gebildet ist, um sich nach außerhalb der Aufnahmekammer (11) zu erstrecken.

3. Explosionssicheres Ventil, das in einen Deckel integriert ist, nach Anspruch 1, wobei ein Verstärkungskanal (3) in dem zweiten Kanal (212) bereitgestellt ist, der Verstärkungskanal (3) zumindest teilweise in den ersten Kanal (211) erstreckt ist und ein Ende des Verstärkungskanals (3) nahe dem ersten Kanal (211) mit einem Auslassventil (31) bereitgestellt ist.

4. Explosionssicheres Ventil, das in einen Deckel integriert ist, nach Anspruch 3, wobei das Auslassventil (31) zumindest einen Stützbalken (311) umfasst und eine Luftstromöffnung (312) zwischen dem Stützbalken (311) und dem Verstärkungskanal (3) gebildet ist.

5. Explosionssicheres Ventil, das in einen Deckel integriert ist, nach Anspruch 4, wobei das Auslassventil (31) drei Stützbalken (311) umfasst.

6. Explosionssicheres Ventil, das in einen Deckel integriert ist, nach Anspruch 5, wobei ein Ende von jedem der drei Stützbalken (311) mit einer Achse des Verstärkungskanals (3) verbunden ist, ein gegenüberliegendes Ende von jedem der drei Stützbalken (311) mit einer Innenwand des Verstärkungskanals (3) verbunden ist.

7. Explosionssicheres Ventil, das in einen Deckel integriert ist, nach Anspruch 6, wobei die Verbindungsweise von beiden Enden der Stützbalken (311) eine einstückige Verbindung ist.

8. Explosionssicheres Ventil, das in einen Deckel integriert ist, nach einem der Ansprüche 4-7, wobei eine Seite des Stützbalkens (311), die der Aufnahmekammer (11) zugewandt ist, mit einem konischen Block (32) bereitgestellt ist.

9. Explosionssicheres Ventil, das in einen Deckel integriert ist, nach Anspruch 8, wobei eine Fläche des konischen Blocks (32) mit einer Strömungsumlenknut bereitgestellt ist, die entlang einer axialen Richtung des konischen Blocks (32) angeordnet ist.

10. Explosionssicheres Ventil, das in einen Deckel integriert ist, nach Anspruch 3, wobei eine abgestufte Montagestruktur (4) zwischen einer Seite des Verstärkungskanals (3), die der Aufnahmekammer (11) zugewandt ist, und dem ersten Kanal (211) gebildet ist, und die atmungsaktive Folie (22) auf der abgestuften Montagestruktur (4) bereitgestellt ist.

11. Explosionssicheres Ventil, das in einen Deckel integriert ist, nach Anspruch 10, wobei die atmungsaktive Folie (22) und die abgestufte Montagestruktur (4) durch thermisches oder Ultraschallschweißen verbunden sind.

12. Explosionssicheres Ventil, das in einen Deckel integriert ist, nach Anspruch 2, wobei Kanten der Öffnung (12) der Aufnahmekammer (11) mit einem Montageflansch (15) bereitgestellt sind, der sich nach außerhalb der Aufnahmekammer (11) erstreckt, und das Ende des zweiten Kanals (212), das die laterale Fläche (14) in der Nähe dazu durchdringt, nicht von einem Ende des Montageflansches (15) vorspringt.

13. Explosionssicheres Ventil, das in einen Deckel integriert ist, nach Anspruch 2, wobei ein Innenwandradius des zweiten Kanals (212) in einer Richtung weg von der Aufnahmekammer (11) allmählich zunimmt.

14. Batteriepack, umfassend ein Batteriemodul, einen Batteriekasten und das explosionssichere Ventil, das in einen Deckel integriert ist, nach einem der Ansprüche 1-13, wobei das Batteriemodul eine oder mehrere Zellen und ein Druckentlastungsventil, das an den Zellen montiert ist, umfasst, und das Druckentlastungsventil in Verbindung mit einem Ende des Druckentlastungskanals (21) ist.

## Revendications

1. Soupape antidéflagrante intégrée dans un couvercle supérieur, comprenant :
un corps (1) de couvercle supérieur, doté d'une chambre de réception (11) ;
un corps (2) de soupape antidéflagrante, comprenant un canal de décharge de pression (21) et un film respirant (22), ledit canal de décharge de pression (21) et ledit corps (1) de couvercle supérieur étant moulés d'une seule pièce, une extrémité du canal de décharge de pression (21) étant en communication avec un intérieur de la chambre de réception (11), une extrémité opposée du canal de décharge de pression (21) étant en communication avec un extérieur de la chambre de réception (11), et le film respirant (22) étant assemblé à l'extrémité du canal de décharge de pression (21) ;
**caractérisée en ce qu'**un côté de la chambre de réception (11) est ouvert pour former une ouverture (12), un autre côté de la chambre de réception (11) opposé à l'ouverture (12) est une surface d'extrémité (13) du corps (1) de couvercle supérieur, le canal de décharge de pression (21) comprend un premier canal (211) et un second canal (212), le premier canal (211) est relié verticalement à la surface d'extrémité (13), et le second canal (212) est relié verticalement au premier canal (211).

2. Soupape antidéflagrante intégrée dans un couvercle supérieur selon la revendication 1, ladite surface d'extrémité (13) du corps (1) de couvercle supérieur étant bordée d'une pluralité de surfaces latérales (14), le second canal (212) pénétrant dans l'une de la pluralité de surfaces latérales (14) qui est proche de celui-ci, le second canal (212) étant au moins partiellement incorporé dans la surface latérale (14) proche de celui-ci, et une ouverture de décharge de pression (23) étant formée par une extrémité du second canal (212) pénétrant à travers la surface latérale (14) qui est proche de celui-ci pour être étendu vers l'extérieur de la chambre de réception (11).

3. Soupape antidéflagrante intégrée dans un couvercle supérieur selon la revendication 1, un canal de renforcement (3) étant prévu dans le second canal (212), ledit canal de renforcement (3) étant au moins partiellement étendu dans le premier canal (211), et une extrémité du canal de renforcement (3) proximale au premier canal (211) étant dotée d'une soupape d'écoulement sortant (31).

4. Soupape antidéflagrante intégrée dans un couvercle supérieur selon la revendication 3, ladite soupape d'écoulement sortant (31) comprenant au moins un bras de support (311), et un orifice d'écoulement d'air (312) étant formé entre le bras de support (311) et le canal de renforcement (3).

5. Soupape antidéflagrante intégrée dans un couvercle supérieur selon la revendication 4, ladite soupape d'écoulement sortant (31) comprenant trois bras de support (311).

6. Soupape antidéflagrante intégrée dans un couvercle supérieur selon la revendication 5,
une extrémité de chacun des trois bras de support (311) étant relié à un axe du canal de renforcement (3), une extrémité opposée de chacun des trois bras de support (311) étant relié à une paroi interne du canal de renforcement (3).

7. Soupape antidéflagrante intégrée dans un couvercle supérieur selon la revendication 6, ledit mode de liaison des deux extrémités des bras de support (311) étant une liaison d'un seul tenant.

8. Soupape antidéflagrante intégrée dans un couvercle supérieur selon l'une quelconque des revendications 4-7, un côté du bras de support (311) faisant face à la chambre de réception (11) étant doté d'un bloc conique (32).

9. Soupape antidéflagrante intégrée dans un couvercle supérieur selon la revendication 8, une surface du bloc conique (32) étant dotée d'une rainure de dérivation d'écoulement agencée le long d'une direction axiale du bloc conique (32).

10. Soupape antidéflagrante intégrée dans un couvercle supérieur selon la revendication 3, une structure d'assemblage étagée (4) étant formée entre un côté du canal de renforcement (3) faisant face à la chambre de réception (11) et le premier canal (211), et ledit film respirant (22) étant prévu sur la structure d'assemblage étagée (4).

11. Soupape antidéflagrante intégrée dans un couvercle supérieur selon la revendication 10, ledit film respirant (22) et ladite structure d'assemblage étagée (4) étant reliés par soudage thermique ou ultrasonique.

12. Soupape antidéflagrante intégrée dans un couvercle supérieur selon la revendication 2, des bords de l'ouverture (12) de la chambre de réception (11) étant dotés d'une bride d'assemblage (15) s'étendant vers l'extérieur de la chambre de réception (11), et ladite extrémité du second canal (212) qui pénètre à travers la surface latérale (14) qui est proche de celui-ci, ne faisant pas saillie à partir d'une extrémité de la bride d'assemblage (15).

13. Soupape antidéflagrante intégrée dans un couvercle supérieur selon la revendication 2, un rayon de paroi interne du second canal (212) augmentant progressivement dans une direction s'éloignant de la chambre de réception (11).

14. Bloc-batterie, comprenant un module de batterie, un boîtier de batterie, et la soupape antidéflagrante intégrée dans un couvercle supérieur selon l'une quelconque des revendications 1-13, ledit module de batterie comprenant une ou plusieurs cellules et une soupape de décharge de pression assemblée aux cellules, et ladite soupape de décharge de pression étant en communication avec une extrémité du canal de décharge de pression (21).
